(19) Europäisches Patentamt / European Patent Office / Office européen des brevets

(11) **EP 4 422 122 B1**

(12) **EUROPÄISCHE PATENTSCHRIFT**

(45) Veröffentlichungstag und Bekanntmachung des Hinweises auf die Patenterteilung:
**23.04.2025   Patentblatt 2025/17**

(21) Anmeldenummer: **24157993.7**

(22) Anmeldetag: **16.02.2024**

(51) Internationale Patentklassifikation (IPC):
**H04L 9/08** (2006.01)

(52) Gemeinsame Patentklassifikation (CPC):
**H04L 9/0852;** H04L 2209/34

(54) **QUANTENSCHLÜSSELAUSTAUSCH**

QUANTUM KEY EXCHANGE

ÉCHANGE DE CLÉ QUANTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.02.2023   DE 102023104245**

(43) Veröffentlichungstag der Anmeldung:
**28.08.2024   Patentblatt 2024/35**

(73) Patentinhaber: **Quantum Optics Jena GmbH 07745 Jena (DE)**

(72) Erfinder: **HEILMANN, René 99195 Schwansee (DE)**

(74) Vertreter: **Louis Pöhlau Lohrentz Patentanwälte Merianstrasse 26 90409 Nürnberg (DE)**

(56) Entgegenhaltungen:
**EP-A1- 3 771 137**

- **ERVEN C ET AL: "Entangled Quantum Key Distribution Over Two Free-Space Optical Links", ARXIV.ORG, CORNELL UNIVERSITY LIBRARY, 201 OLIN LIBRARY CORNELL UNIVERSITY ITHACA, NY 14853, 15 July 2008 (2008-07-15), XP080426793, DOI: 10.1364/ OE.16.016840**

**Beschreibung**

Die Erfindung betrifft ein Verfahren zur Schlüsselerzeugung mittels Quantenschlüsselaustausch nach den Merkmalen des Oberbegriffs des Anspruchs 1 und ein System zur Schlüsselerzeugung mittels Quantenschlüsselaustausch nach den Merkmalen des Oberbegriffs des Anspruchs 14.

Die Erzeugung eines Schlüssels mittels Quantenschlüsselaustausch (QKD), beispielsweise mit polarisationsverschränkten Photonenpaaren, ist einer klassischen Schlüsselerzeugung weit überlegen, da die Sicherheit dieser Art der Erzeugung nicht auf einer mathematischen Berechnung oder auf einem Algorithmus basiert, sondern auf physikalischen Naturgesetzen des Systems, d.h. der Verschränkung der Photonenpaare.

Für einen Quantenschlüsselaustausch (QKD) werden die verschränkten Photonenpaare in einer Quelle erzeugt und jeweils ein Photon jedes Photonenpaars an einen ersten Empfänger und an einen zweiten Empfänger in jeweils einem Quantenkanal übertragen. Bei beiden Empfängern werden die Photonen zur Erzeugung eines Rohschlüssels gemessen.

Wesentlich ist, dass für einen gemeinsamen Schlüssel nur Messergebnisse der verschränkten Photonenpaare verwendet werden aber beiden Empfängern nicht nur Photonen der verschränkten Photonenpaare gemessen werden, sondern Messergebnisse auch durch Streulicht oder Verlust eines Photons eines Photonenpaares erhalten werden oder zusätzliche Messergebnisse durch elektronisches Rauschen erzeugt werden. Messergebnisse nicht verschränkte Photonenpaare, werden durch den Schritt der Sichtung im Verlauf des Quantenschlüsselaustauschs verworfen um bei beiden Empfängern jeweils einen gesichteten Schlüssel zu erzeugen.

Zur Sichtung werden nach der Messung der Photonen Informationen zwischen den beiden Empfängern ausgetauscht. Dabei handelt es sich bei diesen Informationen beispielsweise um die Zeitstempel der gemessenen Photonen, d.h. die Zeitstempel der Messergebnisse, um die Photonenpaare zu ermitteln. Zur Sichtung überträgt in bekannten Verfahren der erste Empfänger alle ungefilterten Informationen an den zweiten Empfänger und gleichzeitig übermittelt der zweiten Empfänger alle ungefilterten Informationen an den ersten Empfänger. Danach führt jeder Empfänger für sich den Sichtungsprozess an seinem eigenen Rohschlüssel durch.

Der Austausch dieser Informationen erfolgt in der Regel über einen klassischen Kanal. Die zu übertragenen Informationen zur Sichtung erzeugen den mit Abstand größten Teil der Datenlast im klassischen Kanal zwischen den beiden Empfängern. Somit muss zur Erzeugung eines Schlüssels durch einen Quantenschlüsselaustausch ein klassischer Kanal mit sehr großer Bandbreite zur Verfügung gestellt werden, oder die Rate zur Erzeugung eines Schlüssels durch einen Quantenschlüsselaustausch ist durch die maximale Übertragungsrate des klassischen Kanals begrenzt. EP3771137A1 beschreibt ein Verfahren zur Quantum Key Distribution, QKD, mittels Ausrichtung einer verschränkten Photonenquelle und einer weiteren verschränkten Photonenquelle, die zwei verschiedene Empfänger aufweist.

Der vorliegenden Erfindung liegt die Aufgabe zugrunde, ein verbessertes Verfahren und ein verbessertes System zur Schlüsselerzeugung bei einem Quantenschlüsselaustausch (QKD) bereitzustellen.

Die Aufgabe wird erfindungsgemäß durch ein Verfahren zur Schlüsselerzeugung mit Quantenschlüsselaustausch nach den Merkmalen des Anspruchs 1 gelöst.

Erfindungsgemäß wird ein Verfahren zur Schlüsselerzeugung mit Quantenschlüsselaustausch vorgeschlagen, zwischen einem ersten Empfänger und einem zweiten Empfänger von Photonen, wobei das Verfahren folgende Schritte umfasst:

 i) Erzeugung von verschränkten Photonenpaaren mit jeweils einem Signal-Photon und einem Idler-Photon in einer Quelle;
 ii) Übermittlung der Signal-Photonen in einen ersten Quantenkanal zu dem ersten Empfänger und Übermittlung der Idler-Photonen in einen zweiten Quantenkanal zu dem zweiten Empfänger;
 iii) Messung von Photonen beim ersten Empfänger zur Erzeugung eines ersten Rohschlüssels und erster Empfänger-Daten und Messung von Photonen beim zweiten Empfänger zur Erzeugung eines zweiten Rohschlüssels und zweiter Empfänger-Daten;
 iv) Erzeugung eines ersten gesichteten Schlüssels beim ersten Empfänger und Erzeugung eines zweiten gesichteten Schlüssels beim zweiten Empfänger durch Sichtung des ersten und zweiten Rohschlüssels und anschließend Erzeugung eines gemeinsamen Schlüssels beim ersten Empfänger und beim zweiten Empfänger;

 Wesentlich dabei ist, dass in Schritt iv) die ersten Empfänger-Daten zuerst vom ersten Empfänger zum zweiten Empfänger übermittelt werden, und dass anschließend in Schritt iv) beim zweiten Empfänger eine Vorsichtung zur Reduzierung der zweiten Empfänger-Daten erfolgt, auf Grundlage der ersten Empfänger-Daten und einem oder mehreren Vorsichtungsparametern, und dass anschließend in Schritt iv) die vorgesichteten zweiten Empfänger-Daten an den ersten Empfänger übermittelt werden, und
 dass in Schritt iv) die Erzeugung des ersten gesichteten Schlüssels und des zweiten gesichteten Schlüssels anhand der ersten Empfänger-Daten und der vorgesichteten zweiten Empfänger-Daten und einem oder mehreren Sichtungsparametern erfolgt.

Weiter wird die Aufgabe durch ein System zur Schlüsselerzeugung zwischen einem ersten Empfänger und einem zweiten Empfänger mit Quantenschlüsselaustausch nach den Merkmalen des Anspruchs 14 gelöst.

Erfindungsgemäß wird ein System zur Schlüsselerzeugung mit Quantenschlüsselaustausch vorgeschlagen, wobei das System eine Quelle, einen ersten Empfänger und einen zweiten Empfänger aufweist, und

wobei die Quelle ein nicht-lineares Element zur Erzeugung verschränkter Photonenpaare mit jeweils einem Signal-Photon und einem Idler-Photon aufweist, und

wobei die Quelle über einen ersten Quantenkanal mit dem ersten Empfänger zur Übertragung der Signal-Photonen verbunden ist und die Quelle über einen zweiten Quantenkanal mit dem zweiten Empfänger zur Übertragung der Idler-Photonen verbunden ist, und

dass der erste Empfänger ein erstes Messmodul zur Messung von Photonen beim ersten Empfänger und eine erste Elektronik zur Erzeugung des ersten Rohschlüssels und erster Empfänger-Daten aus den Messergebnissen des ersten Messmoduls aufweist und zu deren Verarbeitung und Speicherung, und

dass der zweite Empfänger ein zweites Messmodul zur Messung der Photonen beim zweiten Empfänger und eine zweite Elektronik zur Erzeugung eines zweiten Rohschlüssels und zweiter Empfänger-Daten aus den Messergebnissen des zweiten Messmoduls aufweist und zu deren Verarbeitung und Speicherung, und dass der erste Empfänger und der zweite Empfänger über einen klassischen Kanal miteinander verbunden sind.

Wesentlich dabei ist, dass die Übertragungsrate der Photonen im zweiten Quantenkanal von der Quelle zum zweiten Empfänger größer ist als die Übertragungsrate der Photonen im ersten Quantenkanal von der Quelle zum ersten Empfänger, und

dass die zweite Elektronik zur Vorsichtung und Reduzierung der zweiten Empfänger-Daten auf Grundlage der ersten Empfänger-Daten und einem oder mehreren Vorsichtungsparametern ausgebildet ist, und

dass die erste Elektronik und die zweite Elektronik zur Sichtung des ersten Rohschlüssel und des zweiten Rohschlüssels auf Basis der vorgesichteten zweiten Empfänger-Daten und der ersten Empfänger-Daten ausgebildet sind.

Der Vorteil des erfindungsgemäßen Verfahrens und des erfindungsgemäßen Systems liegt in der Reduzierung der zu übertragenden Daten für den Schritt der Sichtung für den Quantenschlüsselaustausch. Dazu werden erfindungsgemäß die ersten Empfänger-Daten zuerst vom ersten Empfänger zum zweiten Empfänger übermittelt und anhand dieser Daten die Vorsichtung der zweiten Empfänger-Daten durchgeführt. Unter Vorsichtung ist dabei eine Sichtung nur beim zweiten Empfänger und dessen zweiten Empfänger-Daten anhand der Vorsichtungsparameter zu verstehen. Durch diese Vorsichtung werden die zu übertragenden Daten vom zweiten Empfänger an den ersten Empfänger stark reduziert und somit die zu übertragende Datenrate im klassischen Kanal zur Erzeugung des gemeinsamen Schlüssels stark reduziert.

Unter Sichtung kann verstanden werden, dass im jeweiligen Rohschlüssel die Bits ermittelt werden, welche auf verschränkte Photonenpaaren basieren und alle anderen Bits werden verworfen. Bei der Sichtung können auch alle Bits des jeweiligen Rohschlüssels verschränkter Photonenpaare verworfen werden, bei denen zur Messung des verschränkten Photonenpaars unterschiedliche Basen verwendet wurden.

Es kann vorgesehen sein, dass in Schritt iv) als ein oder mehrere Vorsichtungsparameter ein Koinzidenzfenster der Photonenpaare und/oder die Messbasis der Photonenpaare verwendet wird.

Es kann vorgesehen sein, vorzugsweise in Schritt iv), dass das Koinzidenzfenster des Vorsichtungsparameters gleich oder größer dem Koinzidenzfenster der Sichtungsparameter ist. Es kann vorgesehen sein, vorzugsweise in Schritt iv), dass das Koinzidenzfenster des Vorsichtungsparameters mindestens dem doppelten, vorzugsweise mindestens dem dreifachen Koinzidenzfenster der Sichtungsparameter entspricht. Wesentlich dabei ist, dass sich keine Einschränkung bei der Erzeugung des Schlüssels ergibt, solange die Vorsichtungsparameter nicht einschränkender als die Sichtungsparameter für die Sichtung sind.

Es kann vorgesehen sein, dass in Schritt iii) sowohl Photonen der verschränken Photonenpaare als auch nicht verschränkte Photonen beim ersten und/oder beim zweiten Empfänger gemessen werden. Es kann vorgesehen sein, dass in Schritt iii) die ersten und/oder zweiten Empfänger-Daten sowohl durch Photonen der verschränken Photonenpaare als auch nicht verschränkte Photonen beim ersten und/oder beim zweiten Empfänger erzeugt werden. Dabei können die nicht verschränkten Photonen durch Verlust eines Photons eines verschränkten Photonenpaares oder durch zusätzliches Streulicht oder Pumplicht erzeugt werden. Es kann vorgesehen sein, dass in Schritt iii) zusätzliche Daten in den ersten Empfänger-Daten und/oder zweiten Empfänger-Daten durch elektronisches Rauschen erzeugt werden.

Es kann vorgesehen sein, dass die Messung in Schritt iii) beim ersten Empfänger in einem ersten Messmodul zur Messung von Photonen beim ersten Empfänger und einer ersten Elektronik zur Erzeugung des ersten Rohschlüssels und erster Empfänger-Daten aus den Messergebnissen durchgeführt wird und die Verarbeitung und Speicherung in Schritt vi) beim ersten Empfänger, und dass die Messung in Schritt iii) beim zweiten Empfänger in einem zweiten Messmodul zur Messung von Photonen beim zweiten Empfänger und einer zweiten Elektronik zur Erzeugung des zweiten Rohschlüssels und zweiter Empfänger-Daten aus den Messergebnissen durchgeführt wird und die Verarbeitung und Speicherung in Schritt vi) beim zweiten Empfänger. Der Vorteil besteht darin, dass beide Empfänger in den beiden Elektroniken getrennten voneinander den jeweiligen Rohschlüssel und die jeweiligen Empfänger-Daten erzeugen können.

Es kann vorgesehen sein, dass die ersten Empfänger-Daten die Zeitstempel aller Messergebnisse beim ersten Empfänger, und/oder die jeweils verwendete Messbasis aufweisen. Es kann vorgesehen sein, dass die Messergebnisse durch alle gemessenen Photonen beim ersten Empfänger und/oder durch elektronisches Rauschen beim ersten Empfänger erzeugt werden. Es kann vorgesehen sein, dass in einem ersten Schritt, vorzugsweise zur Vorsichtung, zuerst die Zeitstempel oder die Messbasen übermittelt werden und in einem weiteren Schritt, vorzugsweise zur Sichtung, die Messbasen oder die Zeitstempel übermittelt werden.

Es kann vorgesehen sein, dass die zweiten Empfänger-Daten die Zeitstempel aller Messergebnisse beim zweiten Empfänger, und/oder die jeweils verwendete Messbasis aufweisen. Es kann vorgesehen sein, dass die Messergebnisse durch alle gemessenen Photonen beim zweiten Empfänger und/oder durch elektronisches Rauschen beim zweiten Empfänger erzeugt werden.

Es kann vorgesehen sein, dass zur Ermittlung der verschränkten Photonenpaare in den ersten und zweiten Empfänger-Daten der Zeitpunkt der Messung der Signal-Photonen und der Idler-Photonen ausgetauscht werden, vorzugweise die Zeitstempel, um Koinzidenzen zu ermitteln. Koinzidenz bedeutet die zeitgleiche Messung des Signal Photons und des Idler-Photons eines Photonenpaares bei den beiden Empfängern (zeitgleich bedeutet eine Messung der Photonen, welche mit derselben Emissionszeit in der Quelle korrelieren).

Es kann vorgesehen sein, dass der erste Rohschlüssel aus allen Messergebnissen beim ersten Empfänger besteht, vorzugsweise zusammen mit den jeweils verwendeten Messbasen. Es kann vorgesehen sein, dass der zweite Rohschlüssel aus allen Messergebnissen beim zweiten Empfänger besteht, vorzugsweise zusammen mit den jeweils verwendeten Messbasen. Es kann vorgesehen sein, dass jedes Messergebnis des ersten Empfängers ein Bit des ersten Rohschlüssels darstellt und jedes Messergebnis des zweiten Empfängers ein Bit des zweiten Rohschlüssels darstellt.

Es kann vorgesehen sein, dass der erste gesichtete Schlüssel und der zweite gesichtete Schlüssel nur noch aus Messergebnissen von verschränkten Photonenpaaren bestehen, welche für jedes verschränkte Photonenpaar in der gleichen Messbasis gemessen wurden. Es kann vorgesehen sein, dass jedes Photon eines verschränkten Photonenpaares ein Bit des ersten gesichteten Schlüssels darstellt und jedes korrespondierende Photon der verschränkten Photonenpaare ein Bit des zweiten gesichteten Schlüssels darstellt.

Es kann vorgesehen sein, dass zur Beschreibung jedes Messergebnisses, vorzugweise jedes Zeitstempels und/oder der Messbasis, mindestens 8 Bit, vorzugsweise mindestens 24 Bit, höchst vorzugsweise mindestens 64 Bit verwendet werden.

Es kann vorgesehen sein, dass durch die Vorsichtung, vorzugsweise in Schritt iv) eine Reduzierung der zweiten Empfänger-Daten um mindestens 50%, vorzugsweise mindestens 70%, höchst vorzugsweise mindestens 90% erfolgt. Es kann vorgesehen sein, dass durch die Vorsichtung, vorzugweise in Schritt iv), eine Reduzierung der Übertragungsrate der vorgesichteten zweiten Empfänger-Daten zu den zweiten Empfänger Daten im klassischen Kanal von mindestens 50%, vorzugsweise mindestens 70%, höchst vorzugsweise mindestens 90% erfolgt.

Es kann vorgesehen sein, vorzugsweise in Schritt iii), dass die Zählrate der Messergebnisse, vorzugsweise der gemessenen Photonen, beim zweiten Empfänger größer ist als beim ersten Empfänger. Unter Zählrate ist dabei die Anzahl der gemessenen Photonen zu verstehen, vorzugsweise in Schritt iii), höchst vorzugsweise pro Sekunde. Damit kann die Reduzierung der zu übertragenen Daten im klassischen Kanal besonders effizient erfolgen, d.h. dass die Vorsichtung bei dem Empfänger erfolgt, der eine höhere Zählrate aufweist.

In Schritt ii) kann vorgesehen sein, dass die Übertragungsrate im zweiten Quantenkanal von der Quelle zum zweiten Empfänger größer ist als die Übertragungsrate im ersten Quantenkanal von der Quelle zum ersten Empfänger. Die Übertragungsrate ergibt sich aus der Anzahl der Photonen vor dem Quantenkanal abzüglich des Verlustes der Photonen im Quantenkanal bis zum jeweiligen Empfänger.

Es kann vorgesehen sein, dass die Übertragungsrate im zweiten Quantenkanal größer ist, indem der zweite Quantenkanal geringere Verluste der Photonen aufweist, vorzugsweise durch entsprechende Materialauswahl, und/oder dass eine Wellenlänge der Idler-Photonen für eine besserer Übertragungsrate verwendet wird.

Es kann vorgesehen sein, dass der zweite Empfänger bei der Quelle oder in der Nähe der Quelle angeordnet ist.

Es kann vorgesehen sein, dass der zweite Quantenkanal zum zweiten Empfänger kürzer ausgebildet ist als der erste Quantenkanal zum ersten Empfänger.

Es kann vorgesehen sein, dass die Messung der Signal-Photonen und der Idler-Photonen in Schritt iii) in einer aus mindestens zwei gegenseitig unabhängigen Messbasen (mutually unbiased measurement bases) erfolgt.

Es kann vorgesehen sein, dass die Übermittlung der ersten und/oder zweiten Empfänger-Daten, vorzugsweise in Schritt iv), in einem klassischen Kanal erfolgt. Es kann vorgesehen sein, dass der klassische Kanal als ein kabelgebundener Kanal oder Netzwerk und/oder drahtloser Kanal oder Netzwerk ausgebildet ist. Es kann vorgesehen sein, dass die Übertagung in Schritt iv) über den klassischen Kanal durch das Internet oder eine Funkverbindung oder ein Datenbussystem erfolgt. Ein klassischer Kanal wird auch häufig als öffentlicher Kanal bezeichnet. Unter klassischem Kanal kann dabei verstanden werden, dass es sich um einen deterministischen Kanal handelt, über den definierte Einsen und Nullen ausgetauscht werden. Es kann vorgesehen sein, dass die Übermittlung der ersten und/oder zweiten Empfänger-Daten, vorzugsweise in Schritt iv), im klassischen Kanal verschlüsselt oder nicht verschlüsselt erfolgt.

Es kann vorgesehen sein, dass der erste und/oder der zweite Quantenkanal ein Freistrahl-Quantenkanal ist und/oder ein Faser-Quantenkanal ist.

Es kann vorgesehen sein, dass die Wahl der Messbasen in Schritt iii) zufällig erfolgt, vorzugweise zufällig beim ersten Empfänger und unabhängig davon zufällig beim zweiten Empfänger.

Es kann vorgesehen sein, dass nach der Sichtung in Schritt iv) eine Fehlerermittlung beim ersten Empfänger in der ersten Elektronik und beim zweiten Empfänger in der zweiten Elektronik durchgeführt werden. Es kann vorgesehen sein, dass die erste Elektronik und die zweite Elektronik zur Durchführung der Fehlerermittlung ausgebildet sind, und vorzugsweise über den klassischen Kanal zur Fehlerermittlung miteinander kommunizieren.

Es kann vorgesehen sein, dass die erste Elektronik und/oder die zweite Elektronik als eine Hardware basierte Elektronik ausgebildet ist, beispielsweise basierend auf ASICs oder FPGAs, und/oder als eine softwarebasierte Elektronik ausgebildet ist, beispielsweise umfassend einen Mikroprozessor oder einen Signalprozessor und ein ablauffähiges Softwareprogramm.

Es kann vorgesehen sein, dass die mehreren verschränkten Photonenpaare zeitlich nacheinander in Schritt i) erzeugt werden. Es kann vorgesehen sein, dass die mehreren verschränkten Photonenpaare zeitlich nacheinander in Schritt ii) übermittelt werden. Es kann vorgesehen sein, dass die mehreren verschränkten Photonenpaare zeitlich nacheinander in Schritt iii) gemessen werden. Es kann vorgesehen sein, dass während der Übermittlung und/oder Messung bereits weitere Photonenpaare erzeugt werden.

Es kann vorgesehen sein, dass die verschränkten Photonenpaare in der Zeit, und/oder der Polarisation, und/oder im Bahndrehimpuls, und/oder im Spin-Drehimpuls, und/oder Wellenlänge verschränkt sind.

Es kann vorgesehen sein, dass das Verfahren und das System zur Datenübertragung mit Quantenschlüsselaustausch ausgebildet sind.

Es kann vorgesehen sein, dass das Verfahren zur Datenübertragung mit Quantenschlüsselaustausch neben den vorangehend beschriebenen Schritten folgende Schritte umfasst:

v) Verschlüsseln der zu übertragenden Daten beim ersten oder zweiten Empfänger anhand des gemeinsamen Schlüssels;
vi) Übermittlung der verschlüsselten Daten vom ersten oder zweiten Empfänger zum zweiten oder ersten Empfänger;
vii) Entschlüsseln der verschlüsselten Daten beim zweiten oder ersten Empfänger anhand des gemeinsamen Schlüssels.

Es kann vorgesehen sein, dass in dem System zur Datenübertragung mit Quantenschlüsselaustausch die erste Elektronik und/oder die zweite Elektronik zur Verschlüsselung und/oder Entschlüsselung der zu übertragenden Daten ausgebildet sind.

Es kann vorgesehen sein, dass das System zur Durchführung des Verfahrens nach einem der vorangehend beschriebenen Ausführungen ausgebildet ist.

Es kann vorgesehen sein, dass die erste Elektronik und die zweite Elektronik zur Durchführung der Schritte iii) bis iv) des Verfahrens ausgebildet sind, vorzugsweise iii) bis vii).

Es kann vorgesehen sein, dass der gemeinsame Schlüssel vor der Verschlüsselung der Daten bei beiden Empfängern gespeichert wird, vorzugsweise in der ersten Elektronik und der zweiten Elektronik.

Es kann vorgesehen sein, dass die Verschlüsselung der Daten in der ersten Elektronik des ersten Empfängers durchgeführt wird und/oder dass die Entschlüsselung der Daten in der zweiten Elektronik des zweiten Empfängers durchgeführt wird. Es kann vorgesehen sein, dass die Verschlüsselung der Daten in der zweiten Elektronik des zweiten Empfängers durchgeführt wird und/oder dass die Entschlüsselung der Daten in der ersten Elektronik des ersten Empfängers durchgeführt wird.

Als ein nicht ausschließliches Beispiel wird im Folgenden die Vorsichtung und dadurch erhaltene Reduzierung der Daten durch ein erfindungsgemäßes Verfahren mit Quantenschlüsselaustausch mit einen BBM92 Protokoll angeführt.

Es wird für dieses Beispiel angenommen, dass die Quelle der verschränkten Photonen beim ersten Empfänger oder in der Nähe des ersten Empfängers angeordnet ist.

Der erste Empfänger hat eine Zählrate an Photonen (Photonendetektionsrate) von $R_1$ und der zweite Empfänger von $R_2$. Diese ergeben sich aus der Photonenrate $R_0$ direkt nach der Quelle und den jeweiligen relativen Übertragungs-

raten $T_1$ und $T_2$ der Quantenlinks zu den Empfängern (relative Verluste = 1 - $T_x$).

$$R_1 = R_0 \cdot T_1$$

$$R_2 = R_0 \cdot T_2$$

Für die Quelle wird angenommen, dass diese eine Photonenpaarausbeute von $H_0$ aufweist, welche die Anzahl erzeugter verschränkten Photonenpaare $P_0$ ins Verhältnis zur Photonenrate $R_0$ direkt nach der Quelle setzt.

$$P_0 = R_0 \cdot H_0$$

Die Photonenpaarrate ($P_1$, $P_2$) zwischen dem ersten Empfänger und dem zweiten Empfänger ergibt sich dann unter Berücksichtigung aller Verluste:

$$P_1 = P_2 = P_{1,2} = P_0 \cdot T_1 \cdot T_2 = R_0 \cdot H_0 \cdot T_1 \cdot T_2$$

Die Anzahl zu übertragender Ereignisse $E_{total\ non\ inv}$ berechnet sich ohne das erfindungsgemäße Verfahren und System aus

$$E_{total\ non\ inv} = R_1 + R_2 = R_0 \cdot (T_1 + T_2)$$

Im Folgenden wird angenommen, dass der zweite Empfänger die Vorsichtung durchführt. Die kleinstmögliche Anzahl der zu übertragenden Ereignisse $E_{total\ inv}$ mit dem erfindungsgemäßen Verfahren und dem erfindungsgemäßen System mit Sichtungsparameter als Vorsichtungsparameter berechnet sich aus

$$E_{total\ inv} = R_1 + P_2 = R_0 \cdot T_1 \cdot (1 + H_0 \cdot T_2) \gtrsim R_0 \cdot T_1 = R_1$$

Bei bekannten Quellen gilt $H_0 \cdot T_2$ « 1.

Mit dieser Einschränkung reduziert sich die Anzahl der zu übertragenden Ereignisse von $R_1 + R_2$ auf nahezu ($\gtrsim$) $R_1$. Je größer $R_2$ im Verhältnis zu $R_1$ ist, desto größer ist die Reduzierung. Daher sollte für eine bestmögliche Reduzierung der zu übertragenden Ereignisse die Vorsichtung auf der Seite mit den höheren Zählraten durchgeführt werden, d.h. der Empfänger mit der geringeren Zählrate überträgt die Daten zuerst.

Anhand der vorangehend beschriebenen Berechnungen kann die Reduzierung der Datenübertragung für ein derartiges Protokoll berechnet werden. Dafür wird beispielhaft eine Quelle mit $R_0$ = 10 *Mio* Einzelphotonen je Sekunde je Arm und einer Photonenpaarausbeute von $H_0$ = 10 % angenommen, woraus 1 Mio. Photonenpaaren $P_0$ Sekunde folgen. Dies entspricht durchschnittlichen Werten derzeitiger verschränkter Photonenquellen.

Weiter wird, wie bereits angeführt, angenommen, dass die Quelle in der Nähe des zweiten Empfängers ausgebildet ist und dadurch nur geringe bis gar keine Verluste bei der Übertragung stattfinden $T_2$ = 1. Daraus folgt $R_2$ = 10 *Mio Counts*/ s. Zur Übertragung zum ersten Empfänger, wird aufgrund der Entfernung ein Verlust von 20 dB angenommen $T_1$ = 0,01, welches eine Größe darstellt, die für potentielle Nutzer aufgrund der Entfernung der beiden Empfänger noch akzeptabel ist. Daraus folgt $R_1$ = 100 *k Counts/s*. Aus diesen Werten lässt sich die gemessene Paarrate $P_{1,2}$ = 100 *k Paare/s* berechnen.

Zur Beschreibung jeder Photonendetektion werden 64 Bit verwendet, welche den Zeitstempel und die jeweilige Messbasis enthalten.

Für ein nicht erfindungsgemäßes Verfahren und ein entsprechendes System ergibt sich eine notwendige Übertragungsrate im klassischen Kanal von:

$$(100\ k + 10\ Mio)\ 64\ Bit/s = 646\ Mbit/s$$

Für ein erfindungsgemäßes Verfahren und ein entsprechendes System mit den vorangehend beschriebenen beispielhaften Werten ergibt sich eine reduzierte Übertragungsrate im klassischen Kanal von:

$$(100\ k + 10\ k)\ 64\ Bit/s = 7{,}04\ Mbit/s$$

Dies entspricht einer Reduzierung der zu übertragenden Daten durch das erfindungsgemäße Verfahren und das entsprechende System von ca. 98,9%.

Weitere Ausführungen der Erfindung sind in den Figuren dargestellt und nachfolgend beschrieben. In den Figuren ist beispielhaft eine mögliche Ausgestaltung der Erfindung gezeigt. Diese Ausgestaltung dient der Erläuterung einer möglichen Umsetzung der Erfindung und soll nicht eingrenzend verstanden werden. Dabei zeigen:

Fig. 1    eine schematische Darstellung des erfindungsgemäßen Systems zur Schlüsselerzeugung mit Quantenschlüsselaustausch;

Fig. 2    eine schematische Darstellung der Schritte des erfindungsgemäßen Verfahrens zur Schlüsselerzeugung mit Quantenschlüsselaustausch.

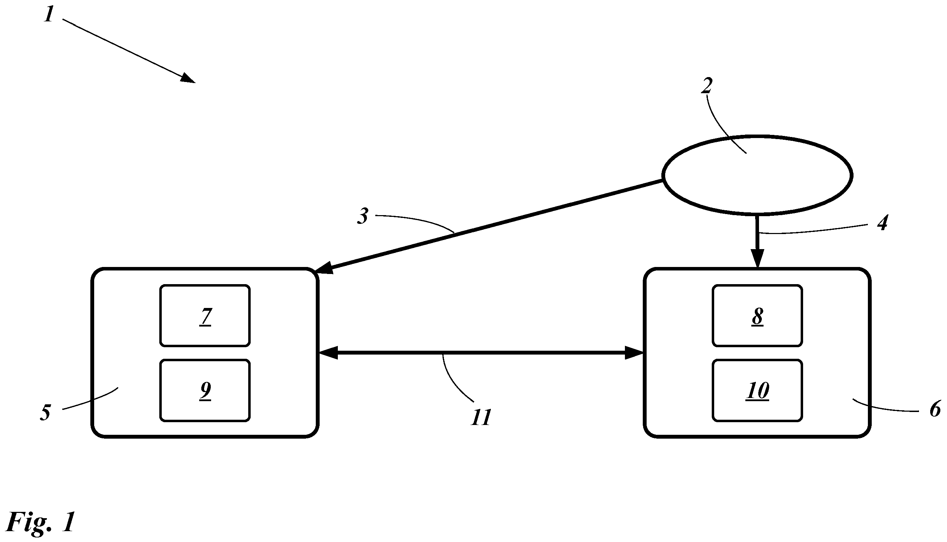

Fig. 1 zeigt ein erfindungsgemäßes System 1 zur Schlüsselerzeugung mit Quantenschlüsselaustausch, welches eine Quelle 2, einen ersten Empfänger 5 und einen zweiten Empfänger 6 umfasst.

Die Quelle 2 erzeugt verschränkte Photonenpaare mit jeweils einem Signal-Photon und einem Idler-Photon. Zur Erzeugung verschränkter Photonenpaare kann ein nicht-lineares Element verwendet werden, welches beispielsweise durch einen Laser gepumpt wird. Die Quelle 2 ist über einen ersten Quantenkanal 3 mit dem ersten Empfänger 5 verbunden und über einen zweiten Quantenkanal 4 mit dem zweiten Empfänger 6 verbunden. Der erste und zweite Quantenkanal 3, 4 kann beispielsweise als Glasfaser ausgebildet sein. Die Quelle 2 ist derart mit dem ersten Quantenkanal 3 und dem zweiten Quantenkanal 4 verbunden, dass die Signal-Photonen der verschränkten Photonenpaare von der Quelle 2 über den ersten Quantenkanal 3 zum ersten Empfänger 5 übermittelt werden, und dass die Idler-Photonen der verschränkten Photonenpaare von der Quelle 2 über den zweiten Quantenkanal 4 zum zweiten Empfänger 6 übermittelt werden.

Der erste Empfänger 5 weist ein erstes Messmodul 7 und eine erste Elektronik 9 auf. In dem ersten Messmodul 7 des ersten Empfängers 5 werden die ankommenden Photonen unter Verwendung einer zufälligen Messbasis gemessen. Das Ergebnis dieser Messung wird in der ersten Elektronik 9 zu einem ersten Rohschlüssel zusammengesetzt und weiter wird der Zeitstempel jeder Messung und die dabei verwendete Messbasis in der ersten Elektronik 9 als erste Empfänger-Daten gespeichert.

Der zweite Empfänger 6 weist ein zweites Messmodul 8 und eine zweite Elektronik 10 auf. In dem zweiten Messmodul 8 des zweiten Empfängers 6 werden die ankommenden Photonen unter Verwendung einer zufälligen Messbasis gemessen. Das Ergebnis dieser Messung wird in der zweiten Elektronik 10 zu einem zweiten Rohschlüssel zusammengesetzt und weiter wird der Zeitstempel jeder Messung und die dabei verwendete Messbasis in der zweiten Elektronik 10 als zweite Empfänger-Daten gespeichert.

Wesentlich ist, dass bei beiden Empfängern nicht nur Photonen der verschränkten Photonenpaare gemessen werden, sondern Messergebnisse auch durch Streulicht oder Verlust eines Photons eines Photonenpaares erhalten werden oder zusätzliche Messergebnisse durch elektronisches Rauschen erzeugt werden. Für einen gemeinsamen Schlüssel erzeugt mit Quantenschlüsselaustausch werden aber nur Messergebnisse von verschränkten Photonenpaaren verwendet. Messergebnisse nicht verschränkter Photonenpaare werden durch den Schritt der Sichtung im Verlauf des Quantenschlüsselaustauschs verworfen, um bei beiden Empfängern jeweils einen gesichteten Schlüssel zu erzeugen und daraus den gemeinsamen Schlüssel, beispielsweise durch Fehlerermittlung, Fehlerkorrektur oder Verstärkung der Privatsphäre zu erzeugen.

Zur Sichtung werden nach der Messung der Photonen die ersten Empfänger-Daten und die zweiten Empfänger-Daten entsprechend des erfindungsgemäßen Verfahrens über den klassischen Kanal 11 ausgetauscht und die Sichtung im System 1 entsprechend durchgeführt.

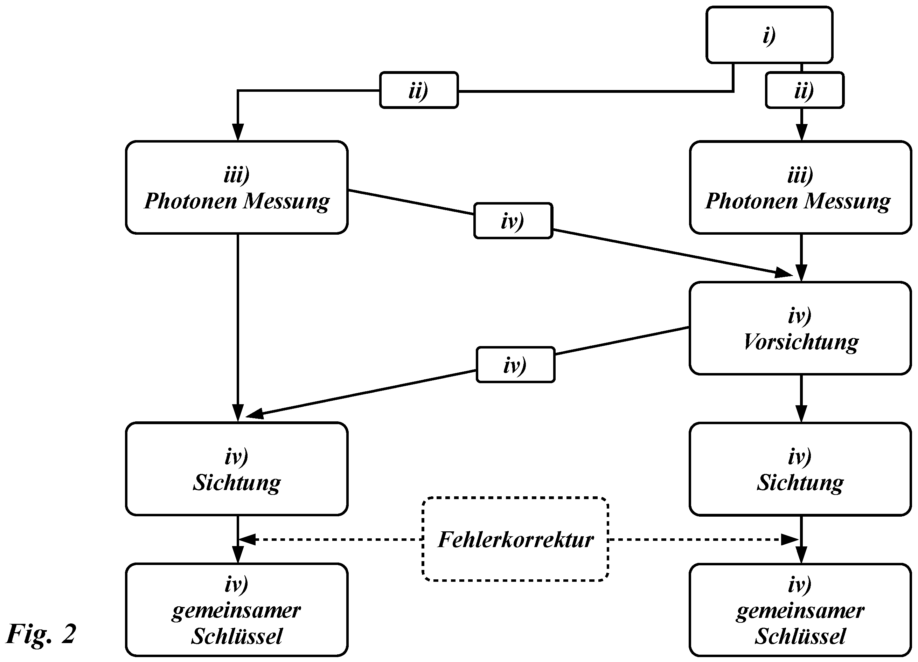

Fig. 2 zeigt die Schritte des erfindungsgemäßen Verfahrens, welches in dem erfindungsgemäßen System 1 der Fig. 1 durchgeführt wird.

Zuerst werden verschränkte Photonenpaare in der Quelle 1 in Schritt i) erzeugt, wobei in Schritt ii) die Signal-Photonen in dem ersten Quantenkanal 3 zu dem ersten Empfänger 5 übermittelt werden und die Idler-Photonen in dem zweiten Quantenkanal 4 zu dem zweiten Empfänger 6 übermittelt werden. Dabei werden die verschränkten Photonenpaare in der Regel zeitlich nacheinander erzeugt und entsprechend auch zeitlich nacheinander zu den Empfängern übermittelt und entsprechend zeitlich nacheinander beim ersten Empfänger 5 und beim zweiten Empfänger 6 gemessen.

Beim ersten Empfänger 5 werden in Schritt iii) im ersten Messmodul 7 Photonen unter Verwendung jeweils einer zufälligen Messbasis gemessen, wobei anschließend in Schritt iii) in der ersten Elektronik 9 das Ergebnis der Messungen in der ersten Elektronik 9 zu dem ersten Rohschlüssel zusammengesetzt wird und der Zeitstempel jeder Messung und die dabei verwendete Messbasis in der ersten Elektronik 9 als erste Empfänger-Daten gespeichert werden.

Beim zweiten Empfänger 6 werden in Schritt iii) im zweiten Messmodul 8 Photonen unter Verwendung jeweils einer zufälligen Messbasis gemessen, wobei anschließend in Schritt iii) in der zweiten Elektronik 10 das Ergebnis der Messungen in der zweiten Elektronik 10 zu dem zweiten Rohschlüssel zusammengesetzt wird und der Zeitstempel jeder Messung und die dabei verwendete Messbasis in der zweiten Elektronik 10 als zweite Empfänger-Daten gespeichert werden.

Zur Sichtung des ersten Rohschlüssels und des zweiten Rohschlüssels in Schritt iv) wird zuerst eine Vorsichtung durchgeführt. Zur Vorsichtung werden die ersten Empfänger-Daten des ersten Empfängers 5 über den klassischen Kanal 11 an den zweiten Empfänger 6 übermittelt. Dabei können beispielsweise nur die Zeitstempel übermittelt werden oder nur die verwendeten Messbasen oder auch beides.

Anhand der ersten Empfänger-Daten führt der zweite Empfänger 6 eine sogenannte Vorsichtung mit Vorsichtungsparametern durch, indem beispielsweise die Zeitstempel der ersten Empfänger-Daten und der zweiten Empfänger-Daten miteinander verglichen werden, um Messergebnisse bzw. Bits im zweiten Rohschlüssel zu verwerfen, die nicht durch verschränkte Photonen erzeugt wurden. Als Vorsichtungsparameter kann dabei beispielsweise ein größeres Zeitfenster zur Bestimmung der verschränkten Photonenpaare verwendet werden, als anschließend dann zur Sichtung. Es ist allerdings auch möglich, als Vorsichtungsparameter beim zweiten Empfänger 6 bereits die Parameter der Sichtung zu verwenden. Durch die Vorsichtung werden somit entsprechend der ersten Empfänger-Daten und einem oder mehreren Vorsichtungsparametern die zweiten Empfänger-Daten vorgesichtet. Dabei kann auch eine Vorsichtung des ersten Rohschlüssels erfolgen, d.h. das Verwerfen von entsprechenden Bits.

Durch die Vorsichtung wird die Größe der zweiten Empfänger-Daten zu den vorgesichteten zweiten Empfänger-Daten reduziert. Diese vorgesichteten zweiten Empfänger-Daten werden dann in Schritt iv) im klassischen Kanal 11 zum ersten Empfänger 5 übertragen. Wesentlich dabei ist, dass die vorgesichteten zweiten Empfänger-Daten anschließend zur Sichtung der ersten Empfänger-Daten beim ersten Empfänger 5 verwendet werden. Ebenfalls wird in Schritt iv) die Sichtung beim zweiten Empfänger 6 durchgeführt, falls die Vorsichtungsparameter noch nicht den Sichtungsparametern entsprochen haben.

Am Ende der Sichtung teilen sich der erste Empfänger 5 und der zweite Empfänger 6 einen korrelierten Schlüssel mit gleicher Länger, d.h. den ersten gesichteten Schlüssel und den zweiten gesichteten Schlüssel. Daraus kann der gemeinsame Schlüssel erzeugt werden, wobei weitere Schritte dazu, wie beispielsweise eine Fehlerermittlung, Fehlerkorrektur oder Verstärkung der Privatsphäre optional durchgeführt werden können, wie in Fig. 2 schematisch durch den gestrichelten Schritt der Fehlerkorrektur angedeutet.

Bezugszeichenliste

| | |
|---|---|
| 1 | System |
| 2 | Quelle |
| 3 | erster Quantenkanal |
| 4 | zweiter Quantenkanal |
| 5 | erster Empfänger |
| 6 | zweiter Empfänger |
| 7 | erstes Messmodul |
| 8 | zweites Messmodul |
| 9 | erste Elektronik |
| 10 | zweite Elektronik |
| 11 | klassischer Kanal |

**Patentansprüche**

1. Verfahren zur Schlüsselerzeugung mit Quantenschlüsselaustausch, zwischen einem ersten Empfänger (5) und einem zweiten Empfänger (6) von Photonen, wobei das Verfahren folgende Schritte umfasst:

   i) Erzeugung von verschränkten Photonenpaaren mit jeweils einem Signal-Photon und einem Idler-Photon in einer Quelle (2);
   ii) Übermittlung der Signal-Photonen in einen ersten Quantenkanal (3) zu dem ersten Empfänger (5) und Übermittlung der Idler-Photonen in einen zweiten Quantenkanal (4) zu dem zweiten Empfänger (6);
   iii) Messung von Photonen beim ersten Empfänger (5) zur Erzeugung eines ersten Rohschlüssels und erster Empfänger-Daten und Messung von Photonen beim zweiten Empfänger (6) zur Erzeugung eines zweiten Rohschlüssels und zweiter Empfänger-Daten;
   iv) Erzeugung eines ersten gesichteten Schlüssels beim ersten Empfänger (5) und Erzeugung eines zweiten gesichteten Schlüssels beim zweiten Empfänger (6) durch Sichtung des ersten und zweiten Rohschlüssels und anschließend Erzeugung eines gemeinsamen Schlüssels beim ersten (5) Empfänger und beim zweiten Empfänger (6);

wobei in Schritt iv) die ersten Empfänger-Daten zuerst vom ersten Empfänger (5) zum zweiten Empfänger (6) übermittelt werden, **dadurch gekennzeichnet,**

**dass** anschließend in Schritt iv) beim zweiten Empfänger (6) eine Vorsichtung zur Reduzierung der zweiten Empfänger-Daten erfolgt, auf Grundlage der ersten Empfänger-Daten und einen oder mehreren Vorsichtungsparametern, und

**dass** anschließend in Schritt iv) die vorgesichteten zweiten Empfänger-Daten an den ersten Empfänger (5) übermittelt werden, und

**dass** in Schritt iv) die Erzeugung des ersten gesichteten Schlüssels und des zweiten gesichteten Schlüssels anhand der ersten Empfänger-Daten und der vorgesichteten zweiten Empfänger-Daten und einen oder mehreren Sichtungsparametern erfolgt.

2. Verfahren nach Anspruch 1,
   **dadurch gekennzeichnet,**
   **dass** in Schritt iv) als ein oder mehrere Vorsichtungsparameter ein Koinzidenzfenster der Photonenpaare und/oder die Messbasis der Photonenpaare verwendet wird, vorzugsweise dass das Koinzidenzfenster des Vorsichtungsparameters gleich oder größer dem Koinzidenzfenster der Sichtungsparameter ist.

3. Verfahren nach Anspruch 1 oder 2,
   **dadurch gekennzeichnet,**
   **dass** in Schritt iii) sowohl Photonen der verschränken Photonenpaare als auch nicht verschränkte Photonen beim ersten und/oder beim zweiten Empfänger (5, 6) gemessen werden, vorzugsweise dass in Schritt iii) die ersten und/oder zweiten Empfänger-Daten sowohl durch Photonen der verschränken Photonenpaare als auch nicht verschränkte Photonen beim ersten und/oder beim zweiten Empfänger (5, 6) erzeugt werden.

4. Verfahren nach einem der Ansprüche 1 bis 3,
   **dadurch gekennzeichnet,**

   **dass** die ersten Empfänger-Daten die Zeitstempel aller Messergebnisse beim ersten Empfänger (5), und/oder die jeweils verwendete Messbasis aufweisen, und/oder

   **dass** die zweiten Empfänger-Daten die Zeitstempel aller Messergebnisse beim zweiten Empfänger (6), und/oder die jeweils verwendete Messbasis aufweisen.

5. Verfahren nach einem der Ansprüche 1 bis 4,
   **dadurch gekennzeichnet,**
   **dass** zur Ermittlung der verschränkten Photonenpaare in den ersten und zweiten Empfänger-Daten der Zeitpunkt der Messung der Signal-Photonen und der Idler-Photonen ausgetauscht werden, vorzugweise die Zeitstempel, um Koinzidenzen zu ermitteln.

6. Verfahren nach einem der Ansprüche 1 bis 5,
   **dadurch gekennzeichnet,**
   **dass** zur Beschreibung jedes Messergebnisses, vorzugweise jedes Zeitstempels und/oder der Messbasis, mindestens 8 Bit, vorzugsweise mindestens 24 Bit, höchst vorzugsweise mindestens 64 Bit verwendet werden.

7. Verfahren nach einem der Ansprüche 1 bis 6,
   **dadurch gekennzeichnet,**
   **dass** durch die Vorsichtung in Schritt iv) eine Reduzierung der zweiten Empfänger-Daten um mindestens 50%, vorzugsweise mindestens 70%, höchst vorzugsweise mindestens 90% erfolgt.

8. Verfahren nach einem der Ansprüche 1 bis 7,
   **dadurch gekennzeichnet,**
   **dass** in Schritt iii) die Zählrate der Messergebnisse, vorzugsweise der gemessenen Photonen, beim zweiten Empfänger (6) größer ist als beim ersten Empfänger (5).

9. Verfahren nach einem der Ansprüche 1 bis 8,
   **dadurch gekennzeichnet,**
   **dass** die Übermittlung der ersten und/oder zweiten Empfänger-Daten, in Schritt vi), in einem klassischen Kanal (11) erfolgt.

**10.** Verfahren nach einem der Ansprüche 1 bis 9,
**dadurch gekennzeichnet,**
**dass** die mehreren verschränkten Photonenpaare zeitlich nacheinander in Schritt i) erzeugt werden, und/oder dass die mehreren verschränkten Photonenpaare zeitlich nacheinander in Schritt ii) übermittelt werden, und/oder dass die mehreren verschränkten Photonenpaare zeitlich nacheinander in Schritt iii) gemessen werden.

**11.** Verfahren nach einem der Ansprüche 1 bis 10,
**dadurch gekennzeichnet,**
**dass** der gemeinsame Schlüssel vor der Verschlüsselung der Daten bei beiden Empfängern (5, 6) gespeichert wird, vorzugsweise in einer ersten Elektronik (9) und einer zweiten Elektronik (10).

**12.** Verfahren nach einem der Ansprüche 1 bis 11,
**dadurch gekennzeichnet,**
**dass** in Schritt iii) die ersten und/oder zweiten Empfänger-Daten sowohl durch Photonen der verschränken Photonenpaare als auch nicht verschränkte Photonen beim ersten und/oder beim zweiten Empfänger (5, 6) erzeugt werden.

**13.** Verfahren zur Datenübertragung mit Quantenschlüsselaustausch
**dadurch gekennzeichnet,**
**dass** das Verfahren zur Datenübertragung mit Quantenschlüsselaustausch neben den Schritten i) bis iv) nach einem der Ansprüche 1 bis 12 folgende weitere Schritte umfasst:

v) Verschlüsseln der zu übertragenden Daten beim ersten oder zweiten Empfänger (5, 6) anhand des gemeinsamen Schlüssels;
vi) Übermittlung der verschlüsselten Daten vom ersten oder zweiten Empfänger (5, 6) zum zweiten oder ersten Empfänger (6, 5);
vii) Entschlüsseln der verschlüsselten Daten beim zweiten oder ersten Empfänger (6, 5) anhand des gemeinsamen Schlüssels.

**14.** System (1) zur Schlüsselerzeugung mit Quantenschlüsselaustausch, wobei das System eine Quelle (2), einen ersten Empfänger (5) und einen zweiten Empfänger (6) aufweist, und

wobei die Quelle (2) ein nicht-lineares Element zur Erzeugung verschränkter Photonenpaare mit jeweils einem Signal-Photon und einem Idler-Photon aufweist, und
wobei die Quelle (2) über einen ersten Quantenkanal (3) mit dem ersten Empfänger (5) zur Übertragung der Signal-Photonen verbunden ist und die Quelle (2) über einen zweiten Quantenkanal (4) mit dem zweiten Empfänger (6) zur Übertragung der Idler-Photonen verbunden ist, und dass der erste Empfänger (5) ein erstes Messmodul (7) zur Messung von Photonen beim ersten Empfänger (5) und eine erste Elektronik (9) zur Erzeugung des ersten Rohschlüssels und erster Empfänger-Daten aus den Messergebnissen des ersten Messmoduls (7) aufweist und zu deren Verarbeitung und Speicherung, und
dass der zweite Empfänger (6) ein zweites Messmodul (8) zur Messung der Photonen beim zweiten Empfänger (6) und eine zweite Elektronik (10) zur Erzeugung eines zweiten Rohschlüssels und zweiter Empfänger-Daten aus den Messergebnissen des zweiten Messmoduls (8) aufweist und zu deren Verarbeitung und Speicherung, und
dass der erste Empfänger (5) und der zweite Empfänger (6) über einen klassischen Kanal (11) miteinander verbunden sind,
wobei die Übertragungsrate der Photonen im zweiten Quantenkanal (4) von der Quelle (2) zum zweiten Empfänger (6) größer ist als die Übertragungsrate der Photonen im ersten Quantenkanal (3) von der Quelle (2) zum ersten Empfänger (5), **dadurch gekennzeichnet,**
**dass** die zweite Elektronik (10) zur Vorsichtung und Reduzierung der zweiten Empfänger-Daten auf Grundlage der ersten Empfänger-Daten und einem oder mehreren Vorsichtungsparametern ausgebildet ist, und dass die erste Elektronik (9) und die zweite Elektronik (10) zur Sichtung des ersten Rohschlüssel und des zweiten Rohschlüssels auf Basis der vorgesichteten zweiten Empfänger-Daten und der ersten Empfänger-Daten ausgebildet sind.

**15.** System (1) nach Anspruch 14,
**dadurch gekennzeichnet,**
**dass** das System (1) zur Datenübertragung mit Quantenschlüsselaustausch ausgebildet ist, indem die erste Elektronik (9) und/oder die zweite Elektronik (10) zur Verschlüsselung und/oder Entschlüsselung der zu übertragenden Daten ausgebildet sind.

**Claims**

1. Method for key generation with quantum key exchange, between a first receiver (5) and a second receiver (6) of photons, wherein the method comprises the following steps:

   i) generation of entangled photon pairs, each with a signal photon and an idler photon in a source (2);
   ii) transmission of the signal photons in a first quantum channel (3) to the first receiver (5) and transmission of the idler photons in a second quantum channel (4) to the second receiver (6);
   iii) measurement of photons at the first receiver (5) to generate a first raw key and first receiver data and measurement of photons at the second receiver (6) to generate a second raw key and second receiver data;
   iv) generation of a first sifted key at the first receiver (5) and generation of a second sifted key at the second receiver (6) by sifting the first and second raw keys and then generation of a common key at the first (5) receiver and the second receiver (6);
   wherein in step iv) the first receiver data is first transmitted from the first receiver (5) to the second receiver (6), **characterized in that,**
   subsequently, in step iv), at the second receiver (6) a pre-sifting is performed to reduce the second receiver data, based on the first receiver data and one or more pre-sifting parameters, and
   subsequently in step iv) the pre-sifted second receiver data is transmitted to the first receiver (5), and
   in step iv) the generation of the first sifted key and the second sifted key are performed on the basis of the first receiver data and the pre-sifted second receiver data and one or more sifting parameters.

2. The method according to claim 1,
   **characterized in that,**
   in step iv) a coincidence window of the photon pairs and/or the measurement basis of the photon pairs is used as one or more pre-sifting parameters, preferably that the coincidence window of the pre-sifting parameter is equal to or greater than the coincidence window of the sifting parameters.

3. Method according to claim 1 or 2,
   **characterized in that,**
   in step iii) photons of the entangled photon pairs as well as non-entangled photons are measured at the first and/or at the second receiver (5, 6), preferably that in step iii) the first and/or second receiver data are generated by photons of the entangled photon pairs as well as by non-entangled photons at the first and/or at the second receiver (5, 6).

4. Method according to one of claims 1 to 3,
   **characterized in that,**
   the first receiver data comprise the time stamps of all measurement results at the first receiver (5), and/or the respective measurement basis used, and/or the second receiver data comprise the time stamps of all measurement results at the second receiver (6) and/or the respective measurement basis used.

5. Method according to one of claims 1 to 4,
   **characterized in that,**
   in order to determine the entangled photon pairs in the first and second receiver data, the measurement time of the signal photons and the idler photons are exchanged, preferably the time stamps, in order to determine coincidences.

6. Method according to one of claims 1 to 5,
   **characterized in that,**
   at least 8 bits, preferably at least 24 bits, most preferably at least 64 bits are used to describe each measurement result, preferably each time stamp and/or the measurement basis.

7. Method according to one of claims 1 to 6,
   **characterized in that,**
   the pre-sifting in step iv) results in a reduction of the second receiver data by at least 50%, preferably at least 70%, most preferably at least 90%.

8. Method according to one of claims 1 to 7,
**characterized in that,**
in step iii) the count rate of the measurement results, preferably of the measured photons, is greater at the second receiver (6) than at the first receiver (5).

9. Method according to one of claims 1 to 8,
**characterized in that,**
the transmission of the first and/or second receiver data, in step vi), takes place in a classical channel (11).

10. Method according to one of claims 1 to 9,
**characterized in that,**
the plurality of entangled photon pairs are generated one after the other in step i), and/or the plurality of entangled photon pairs are transmitted one after the other in step ii), and/or the plurality of entangled photon pairs are measured one after the other in step iii).

11. Method according to one of claims 1 to 10,
**characterized in that,**
before the data are encrypted, the common key is stored at both receivers (5, 6), preferably in a first electronics (9) and a second electronics (10).

12. Method according to one of claims 1 to 11,
**characterized in that,**
in step iii) the first and/or second receiver data are generated both by photons of the entangled photon pairs and non-entangled photons at the first and/or second receiver (5, 6).

13. Method for data transmission with quantum key exchange
**characterized in that,**
the method for data transmission with quantum key exchange comprises, in addition to steps i) to iv) according to any one of claims 1 to 12, the following further steps:

v) encrypting the data to be transmitted at the first or second receiver (5, 6) using the common key;
vi) transmission of the encrypted data from the first or second receiver (5, 6) to the second or first receiver (6, 5);
vii) decrypting the encrypted data at the second or first receiver (6, 5) using the common key.

14. System (1) for key generation with quantum key exchange, wherein the system comprises a source (2), a first receiver (5) and a second receiver (6), and

wherein the source (2) comprises a non-linear element for generating entangled photon pairs each comprising a signal photon and an idler photon, and
wherein the source (2) is connected via a first quantum channel (3) to the first receiver (5) for transmission of the signal photons and the source (2) is connected via a second quantum channel (4) to the second receiver (6) for transmission of the idler photons, and
wherein the first receiver (5) has a first measurement module (7) for measuring photons at the first receiver (5) and first electronics (9) for generating the first raw key and first receiver data from the measurement results of the first measurement module (7) and for processing and storing them, and wherein the second receiver (6) has a second measuring module (8) for measuring the photons at the second receiver (6) and second electronics (10) for generating a second raw key and second receiver data from the measurement results of the second measuring module (8) and for processing and storing them, and
wherein the first receiver (5) and the second receiver (6) are connected to each other via a classical channel (11),
wherein the transmission rate of the photons in the second quantum channel (4) from the source (2) to the second receiver (6) is greater than the transmission rate of the photons in the first quantum channel (3) from the source (2) to the first receiver (5),
**characterized in that,**
that the second electronics (10) is formed to pre-sift and reduce the second receiver data on the basis of the first receiver data and one or more pre-sifting parameters, and
that the first electronics (9) and the second electronics (10) are formed for sifting the first raw key and the second raw key on the basis of the pre-sifted second receiver data and the first receiver data.

**15.** System (1) according to claim 14,
**characterized in that,**
the system (1) is formed for data transmission with quantum key distribution, **in that** the first electronics (9) and/or the second electronics (10) are formed for encrypting and/or decrypting the data to be transmitted.

**Revendications**

**1.** Procédé de génération de clé avec échange de clé quantique, entre un premier récepteur (5) et un deuxième récepteur (6) de photons, le procédé comprenant les étapes suivantes :

i) génération de paires de photons intriqués comprenant chacune un photon de signal et un photon Idler dans une source (2) ;
ii) transmission des photons de signal dans un premier canal quantique (3) vers le premier récepteur (5) et transmission des photons Idler dans un deuxième canal quantique (4) vers le deuxième récepteur (6) ;
iii) mesurer des photons au niveau du premier récepteur (5) pour générer une première clé brute et des premières données de récepteur, et mesurer des photons au niveau du deuxième récepteur (6) pour générer une deuxième clé brute et des deuxièmes données de récepteur ;
iv) génération d'une première clé tamisée chez le premier récepteur (5) et génération d'une deuxième clé tamisée chez le deuxième récepteur (6) en voyant la première et la deuxième clés brutes, puis génération d'une clé commune chez le premier (5) récepteur et chez le deuxième récepteur (6) ; dans lequel, à l'étape iv), les premières données de récepteur sont d'abord transmises du premier récepteur (5) au deuxième récepteur (6),

**caractérisé en ce que**

ensuite, à l'étape iv), un tamisage préliminaire est effectué au niveau du deuxième récepteur (6) pour réduire les deuxièmes données de récepteur, sur la base des premières données de récepteur et d'un ou plusieurs paramètres de tamisage préliminaire, et
ensuite, à l'étape iv), les deuxièmes données de récepteur tamisées sont transmises au premier récepteur (5), et à l'étape iv), la génération de la première clé tamisée et de la deuxième clé tamisée s'effectue à l'aide des premières données de récepteur et des deuxièmes données de récepteur tamisées et d'un ou plusieurs paramètres de tamisée.

**2.** Procédé selon la revendication 1,
**caractérisé en ce que**
à l'étape iv), on utilise comme un ou plusieurs paramètres de tamisage préliminaire une fenêtre de coïncidence des paires de photons et/ou la base de mesure des paires de photons, de préférence **en ce que** la fenêtre de coïncidence du paramètre de tamisage préliminaire est égale ou supérieure à la fenêtre de coïncidence des paramètres de tamisage.

**3.** Procédé selon la revendication 1 ou 2,
**caractérisé en ce que**
à l'étape iii), aussi bien des photons des paires de photons intriqués que des photons non intriqués sont mesurés au niveau du premier et/ou du deuxième récepteur (5, 6), de préférence **en ce que**, à l'étape iii), les données du premier et/ou du deuxième récepteur sont générées aussi bien par des photons des paires de photons intriqués que par des photons non intriqués au niveau du premier et/ou du deuxième récepteur (5, 6).

**4.** Procédé selon l'une quelconque des revendications 1 à 3,
**caractérisé en ce que**

les premières données de récepteur présentent les horodatages de tous les résultats de mesure chez le premier récepteur (5), et/ou la base de mesure respectivement utilisée, et/ou
les deuxièmes données de récepteur présentent les horodatages de tous les résultats de mesure chez le deuxième récepteur (6), et/ou la base de mesure respectivement utilisée.

**5.** Procédé selon l'une quelconque des revendications 1 à 4,
**caractérisé en ce que**
pour déterminer les paires de photons intriqués dans les premières et deuxièmes données de récepteur, on échange

EP 4 422 122 B1

l'instant de la mesure des photons de signal et des photons Idler, de préférence les horodatages, afin de déterminer des coïncidences.

6. Procédé selon l'une quelconque des revendications 1 à 5,
   **caractérisé en ce que**
   pour décrire chaque résultat de mesure, de préférence chaque horodatage et/ou la base de mesure, on utilise au moins 8 bits, de préférence au moins 24 bits, de manière très préférentielle au moins 64 bits.

7. Procédé selon l'une quelconque des revendications 1 à 6,
   **caractérisé en ce que**
   le tamisage préliminaire à l'étape iv) permet d'obtenir une réduction des deuxièmes données du récepteur d'au moins 50 %, de préférence d'au moins 70 %, de manière très préférentielle d'au moins 90 %.

8. Procédé selon l'une quelconque des revendications 1 à 7,
   **caractérisé en ce que**
   à l'étape iii), le taux de comptage des résultats de mesure, de préférence des photons mesurés, est plus élevé pour le deuxième récepteur (6) que pour le premier récepteur (5).

9. Procédé selon l'une quelconque des revendications 1 à 8,
   **caractérisé en ce que**
   la transmission des premières et/ou deuxièmes données de récepteur, à l'étape vi), s'effectue dans un canal classique (11).

10. Procédé selon l'une quelconque des revendications 1 à 9,
    **caractérisé en ce que**
    les multiples paires de photons intriqués sont générées successivement dans le temps à l'étape i), et/ou **en ce que** les multiples paires de photons intriqués sont transmises successivement dans le temps à l'étape ii), et/ou **en ce que** les multiples paires de photons intriqués sont mesurées successivement dans le temps à l'étape iii).

11. Procédé selon l'une quelconque des revendications 1 à 10,
    **caractérisé en ce que**
    la clé commune est mémorisée avant le cryptage des données chez les deux récepteurs (5, 6), de préférence dans une première électronique (9) et une deuxième électronique (10).

12. Procédé selon l'une quelconque des revendications 1 à 11,
    **caractérisé en ce que**
    à l'étape iii), les premières et/ou deuxièmes données de récepteur sont générées aussi bien par des photons des paires de photons intriqués que par des photons non intriqués chez le premier et/ou le deuxième récepteur (5, 6).

13. Procédé de transmission de données avec échange de clé quantique
    **caractérisé en ce que**
    le procédé de transmission de données avec échange de clé quantique comprend, outre les étapes i) à iv) selon l'une des revendications 1 à 12, les étapes supplémentaires suivantes :

    v) cryptage des données à transmettre chez le premier ou le deuxième récepteur (5, 6) à l'aide de la clé commune ;
    vi) transmission des données cryptées du premier ou du deuxième récepteur (5, 6) au deuxième ou au premier récepteur (6, 5) ;
    vii) décryptage des données cryptées chez le deuxième ou le premier récepteur (6, 5) à l'aide de la clé commune.

14. Système (1) de génération de clé avec échange de clé quantique, le système comprenant une source (2), un premier récepteur (5) et un deuxième récepteur (6), et

    dans lequel la source (2) comprend un élément non linéaire pour générer des paires de photons intriqués ayant chacune un photon de signal et un photon Idler, et
    dans lequel la source (2) est connectée par l'intermédiaire d'un premier canal quantique (3) au premier récepteur (5) pour la transmission des photons de signal, et la source (2) est connectée par l'intermédiaire d'un deuxième canal quantique (4) au deuxième récepteur (6) pour la transmission des photons Idler, et
    dans lequel le premier récepteur (5) présente un premier module de mesure (7) pour mesurer des photons chez le

14

premier récepteur (5) et une première électronique (9) pour générer la première clé brute et des premières données de récepteur à partir des résultats de mesure du premier module de mesure (7) et pour les traiter et les mémoriser, et

dans lequel le deuxième récepteur (6) présente un deuxième module de mesure (8) pour mesurer les photons chez le deuxième récepteur (6) et une deuxième électronique (10) pour générer une deuxième clé brute et des deuxièmes données de récepteur à partir des résultats de mesure du deuxième module de mesure (8) et pour les traiter et les mémoriser, et dans lequel le premier récepteur (5) et le deuxième récepteur (6) sont reliés entre eux par un canal classique (11),

dans lequel la vitesse de transmission des photons dans le deuxième canal quantique (4) de la source (2) au deuxième récepteur (6) est supérieure à la vitesse de transmission des photons dans le premier canal quantique (3) de la source (2) au premier récepteur (5),

**caractérisé en ce que**

le deuxième système électronique (10) est conçu pour le tamisage préliminaire et la réduction des deuxièmes données de récepteur sur la base des premières données de récepteur et d'un ou plusieurs paramètres de tamisage préliminaire, et

la première électronique (9) et la deuxième électronique (10) sont conçues pour le tamisage de la première clé brute et de la deuxième clé brute sur la base des deuxièmes données de récepteur tamisées et des premières données de récepteur.

**15.** Système (1) selon la revendication 14,
**caractérisé en ce que**
le système (1) est conçu pour la transmission de données avec échange de clé quantique, **en ce que** la première électronique (9) et/ou la deuxième électronique (10) sont conçues pour le cryptage et/ou le décryptage des données à transmettre.

Fig. 1

16

Fig. 2

EP 4 422 122 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3771137 A1